# EUROPÄISCHE PATENTSCHRIFT

(11) **EP 2 151 596 B1**
(45) Veröffentlichungstag und Bekanntmachung des Hinweises auf die Patenterteilung: **02.11.2011**
(21) Anmeldenummer: 08163370.3
(22) Anmeldetag: 01.09.2008
(51) Int. Cl.: F16D 65/00

(54) **Vorrichtung zum Auffangen und/oder Zurückhalten von Bremsabrieb einer Bremseinheit sowie entsprechende Bremseinheit**
Device for capturing and/or retaining brake dust of a braking unit and corresponding brake unit
Dispositif d'absorption et/ou d'empêchement de poussière de freinage d'une unité de freinage ainsi qu'unité de freinage correspondante

(30) Priorität: 31.07.2008 EP 08161543
(43) Veröffentlichungstag der Anmeldung: 10.02.2010
(73) Patentinhaber: Baumüller Nürnberg GmbH, 90482 Nürnberg (DE)
(72) Erfinder: Lemke, Peter, 91126 Schwabach (DE)
(74) Vertreter: Götz, Georg Alois

(56) Entgegenhaltungen:
- WO-A-2004/067985
- WO-A-2004/080740
- US-A- 873 532
- US-A- 2 988 173

## Beschreibung

Die Erfindung betrifft eine Vorrichtung zum Auffangen und/oder Zurückhalten von Bremsabrieb einer Bremseinheit sowie eine entsprechende Bremseinheit.

Beim Bremsvorgang mit Bremseinheiten, bei denen die Bremswirkung auf dem Aneinanderpressen bzw. -reiben verschiedener Materialien besteht, beispielsweise beim Bremsen mit Scheibenbremsen, entsteht ein Bremsabrieb bzw. Bremsstaub, der sich beispielsweise auf Funktionseinheiten der Bremse ablagern kann und unter Umständen Funktionsstörungen bzw. eine Verschmutzung der Bremse bewirkt bzw., sofern die Bremseinheit zur Umgebung offen ist, nach außen austreten kann und die Umgebung der Bremse verschmutzt. Beispielsweise ist es bei elektromagnetisch betätigten Scheibenbremsen möglich, dass Abrieb von der Bremse zwischen die bei diesen Bremsen vorhandene Ankerscheibe und den Topfmagneten gelangt. Dadurch können die Funktion der Bremse und insbesondere die Funktion eines Schalters beeinträchtigt werden, der häufig zur Rückmeldung des Schaltzustands in derartige Bremsen eingebaut ist.

Im Kraftfahrzeugbereich gibt es bereits einige Druckschriften, die sich mit dem Auffangen von Bremsstaub bzw. Bremsabrieb beschäftigen. So ist es beispielsweise aus der DE 20 2005 009 278 U1 bekannt, als Vorrichtung zum Auffangen der an einer Scheibenbremse entstehenden Bremsbelagabriebe eine Art Wanne zu verwenden, in der mittels statischer Aufladung der Bremsstaub bzw. der Bremsabrieb aufgefangen werden. Die DE 10 2005 047 351 A1 beschreibt eine Auffangvorrichtung zum Auffangen von beim Betätigen einer Bremsvorrichtung zum Abbremsen eines Rades in einem Fahrzeug anfallenden Staubpartikeln, die ein Aufnahmemittel zum Aufnehmen der Staubpartikel enthält, das beispielsweise ein Gitter aufweist bzw. korbförmig ausgestaltet ist. Auch das Verwenden eines auf Basis einer Hochspannung wirkenden Haftmittels wird erwähnt.

Gemäß der DE 103 36 984 A1 kann eine Rückhaltevorrichtung mit Abstreifelementen bei einer Scheibenbremse verwendet werden. Bei der Scheibenbremse für Fahrzeugräder gemäß der DE 39 34 422 A1 schließlich soll sich der Bremsstaub in einem Behälter sammeln, bei dem ein Filter aus mehreren Schichten bzw. Lagen vorgesehen ist.

Bei diesen ausschließlich aus dem Kraftfahrzeugbereich stammenden Vorrichtungen ist jedoch zu beachten, dass, beispielsweise bei Anlegen einer Spannung, entweder eine zusätzliche äußere Energiequelle, also eine Fremdenergie, erforderlich ist. Oder es besteht, z. B. bei der Verwendung von Schichtstrukturen bzw. üblichen Filtern, das Problem, dass es nur schwer gelingt, den Abrieb gleichzeitig wirksam in die Vorrichtung hineinzutragen und ihn dann dort möglichst zuverlässig zurückzuhalten. Wünschenswerterweise müsste also einerseits die Luft mit den Staubpartikeln optimal in die Vorrichtung einströmen können und die Staubpartikel dürften andererseits durch den Luftstrom auch nicht wieder hinausgetragen werden.
Die WO 2004/067 985 A betrifft eine gattungsgemäße elektromagnetische Bremse. Diese weist Magnete auf, um magnetischen Bremsabrieb aufzufangen.
Die US 2 988 173 A betrifft eine Vorrichtung zum Auffangen von magnetischem Staub. Diese besteht aus einem Magnetkörper, der auf der Bremsscheibe montiert ist. Der Magnetkörper ist im Wesentlichen zylinderförmig.
Aus der US 873 532 A ist ein Staubfänger für metallischen Staub bekannt, der von Fahrzeugen wie Zügen beim Bremsen erzeugt wird. Dieser ist als Magnet ausgebildet und besteht aus einer Spule und dem Bremsschuh.
WO 2004/080 740 A beschreibt ein Verfahren und eine Vorrichtung zum Entfernen von Verschmutzungen, die sich auf einer Straße befinden. Bei diesen Verschmutzungen handelt es sich zum Beispiel um Öl, toxische Chemikalien und auch Bremsabrieb. Die Auffangvorrichtung befindet sich unterhalb des Kraftfahrzeugs oder auch in einem Fahrzeugschacht.

Dementsprechend liegt der vorliegenden Erfindung die Aufgabe zugrunde, eine gegenüber dem Stand der Technik verbesserte Vorrichtung sowie eine entsprechende Bremseinheit anzugeben.

Zur Lösung dieser Aufgabe ist eine Vorrichtung zum Auffangen und/oder Zurückhalten von Bremsabrieb einer Bremseinheit vorgesehen, die sich dadurch auszeichnet, dass die Vorrichtung mit wenigstens einer Magnetanordnung zum Auffangen und/oder Zurückhalten von, zumindest im Wesentlichen, magnetischem Bremsabrieb mittels Magnetkraft ausgebildet ist, wobei die Magnetanordnung derart zur Förderung des Eintrags von Bremsabrieb strukturiert ist, dass sie bei Verwendung der Vorrichtung in einer Bremseinheit mit Erhebungen sich abwechselnder Polarität ausgebildet ist.

Die Erfindung, die beispielsweise oder auch vorrangig bei Industriebremsen, aber grundsätzlich auch bei Bremsen in anderen Bereichen angewandt werden kann, beruht somit auf dem magnetischen Wirkprinzip. Für Industriebremsen, bei denen selbstverständlich auch das Problem von Funktionsstörungen und Verschmutzungen besteht, sind Auffangvorrichtungen für Bremsstaub bisher nicht bekannt.

Der Bremsabrieb, der im Rahmen der Erfindung sehr allgemein als beim Bremsvorgang entstehender Staub bzw. anderes durch den Bremsvorgang frei werdendes bzw. in die Umgebung abgegebenes Material zu verstehen ist, kann also magnetisch zurückgehalten bzw. aufgefangen werden.

Besonders vorteilhaft bei Verwendung des Magnetprinzips ist, dass hierzu keine Fremdenergie nötig ist, wie dies beispielsweise im Stand der Technik der Fall ist, wenn eine geeignete Spannung von außen angelegt wird. Permanentmagnete benötigen keine derartige äußere Energiequelle.

In einer Ausgestaltung ist die Vorrichtung mit wenigstens einem eine Förderrichtung des Eintrags von Bremsabrieb geeignete Strukturierung an wenigstens einer äußeren Oberfläche aufweisenden porösen Mittel ausgebildet. Die Besonderheit beim Adsorptionsprinzip ist, dass nicht nur durch die poröse Strukturierung der Mittel eine zum Auffangen des Abriebs geeignete Innenstruktur vorgegeben ist, sondern auch eine geeignete Gestaltung der äußeren Oberfläche derart vorliegt, dass der Eintrag von Bremsabrieb gezielt gefördert bzw. verbessert wird.

Ein besonderer Punkt bei der vorliegenden Erfindung ist, wie bereits dargelegt wurde, dass diese erstmalig eine Auffangeinheit für Bremsabrieb im Kontext von Industriebremsen, also nicht nur bei Radbremsen bzw. Kraftfahrzeugbremsen, vorsieht. Mit einer derartigen Auffangeinheit kann eine Beschädigung der Bremseinheit als solcher oder auch eine unerwünschte Verschmutzung oder Schädigung von Bauteilen in der Umgebung einer Maschine mit einer solchen Bremse verhindert werden.

Erfindungsgemäß können wenigstens eine Magnetanordnung und/oder wenigstens ein poröses Mittel derart zur Förderung des Eintrags von Bremsabrieb strukturiert sein, dass zumindest die, bei Verwendung der Vorrichtung in einer Bremseinheit, einem inneren Bereich der Bremseinheit zugewandete äußere Oberfläche des porösen Mittels wellenartig und/oder zur Wirbelbildung eines, insbesondere durch eine Rotation einer Bremsscheibe einer entsprechenden Bremseinheit entstehenden, Luftstroms in der Vorrichtung in wenigstens einem für den Eintrag von Bremsabrieb vorgesehenen Bereich der Vorrichtung ausgebildet ist.

Erfindungsgemäß können somit nicht nur das oder die porösen Mittel, sondern ebenso bei Nutzung des Magnetprinzips der Magnet bzw. die Magnetanordnung an der äußeren Oberfläche strukturiert sein, um so den Bremsabriebeintrag zu verbessern. Eine Strukturierung, die sich besonders anbietet, ist eine grundsätzlich wellenartige Strukturierung. In diesem Fall wird, gegebenenfalls auf unterschiedliche Art und Weise, an der Grenzfläche z. B. zum Bereich der einströmenden Luft eine Strukturierung mit Erhebungen und Tälern ausgebildet, durch die es möglich ist, die Bremspartikel wirkungsvoll in die Auffangstruktur, also beispielsweise in das poröse bzw. an das magnetische Material hinein- bzw. heranzutragen. Durch die Strukturierung mit Tälern und Erhebungen entstehen strömungsberuhigte Zonen, in denen eine besonders gute Ablagerung des Materials möglich ist.

Die Auffangeinheit wird dann zweckmäßigerweise insgesamt von einem Luftstrom durchströmt, der beispielsweise durch eine Bremsscheibenrotation entsteht. Die somit in die Auffangvorrichtung eingeleitete Luft kann durch eine geeignete (äußere) Strukturierung des porösen Materials bzw. der Magnetanordnung zur Wirbelbildung angeregt werden, um so die Ablagerung von Abrieb zu verbessern. Bei einer Strukturierung der äußeren Oberfläche einer Magnetanordnung ist es besonders vorteilhaft, wenn die Erhebungen bzw. Berge eine abwechselnde Polarität aufweisen.

Die Vorrichtung und/oder wenigstens eine Magnetanordnung und/oder wenigstens ein poröses Mittel können derart ausgebildet sein, dass der Strömungswiderstand für ein Durchströmen der Vorrichtung durch einen, insbesondere durch eine Rotation einer Bremsscheibe einer entsprechenden Bremseinheit entstehenden, Luftstrom einen geringen und/oder optimalen Wert aufweist und/oder dass wenigstens eine Einström- und wenigstens eine Ausströmstruktur vorgesehen sind.

Die erfindungsgemäße Auffangvorrichtung wird also vorteilhafterweise so gestaltet, dass der Durchströmungswiderstand verringert bzw. gering ist. Ein derart optimierter Durchströmungswiderstand ergibt sich z. B. bei einer Struktur mit Erhebungen und Tälern durch rotierende Luftwalzen in den Tälern der Struktur bzw. ein queres Durchströmen der Berge. Weiterhin ist es von Vorteil, wenn bei der Vorrichtung, z. B: an einem Gehäuse, Einrichtungen bzw. Mittel sowohl zum Ermöglichen des Einströmens als auch des Ausströmens der Luft vorhanden sind, da nur bei einer Durchströmung ein Staubeintrag überhaupt möglich ist. Besteht hingegen keine geeignete Möglichkeit zum Herausströmen, strömt die Luft auch gar nicht erst ein und der Abrieb kann nicht gebunden werden. Somit wird bei der erfindungsgemäßen Auffangeinheit eine optimale Durchströmung, die es erst ermöglicht, dass Staub überhaupt eintreten kann, mit einer optimalen Ablagerung des aufzufangenden Bremsabriebs kombiniert.

Bei Verwendung des magnetischen Wirkprinzips alleine bzw. in Kombination mit der Verwendung eines porösen Mittels kann wenigstens eine Magnetanordnung streifenförmig und/oder kunststoffgebunden ausgebildet sein, insbesondere mit mehreren nebeneinander angeordneten Magnetpolen.

Die Verwendung von streifenförmigen Magneten, insbesondere kunststoffgebundenen Streifen, bietet z. B. den Vorteil, dass die derart ausgebildeten Magnete in einfacher Art und Weise beispielsweise am inneren Umfang eines Bremsgehäuses befestigt werden können, ohne dass (größere) bauliche Veränderungen an den bisher verwendeten Bremsgehäusen erforderlich wären. Bei Streifenmagneten mit mehreren Polen muss nur ein einziges Element, nämlich der zusammenhängende Streifen, geeignet angeordnet werden, nicht eine Vielzahl einzelner (Pol-) Elemente.

Erfindungsgemäß können die Vorrichtung und/oder wenigstens eine Magnetanordnung, insbesondere eine streifenförmig ausgebildete Magnetanordnung, und/oder wenigstens ein poröses Mittel zur Befestigung mittels wenigstens eines Befestigungsmittels an einem inneren Bereich eines Gehäuses einer Bremseinheit ausgebildet sein, insbesondere zur form- und/oder kraft- und/oder stoffschlüssigen Befestigung.

In diesem Fall werden z. B. die Magnetanordnung bzw. das poröse Mittel direkt in einem geeigneten Bereich der Bremseinheit, von der Staub aufgefangen werden soll, angebracht, wobei unterschiedliche Befestigungsmöglichkeiten alleine oder auch in Kombination miteinander verwendet werden können, beispielsweise Nieten, Klemmen oder ein Einspreizen oder Kleben des entsprechenden Abriebauffangmaterials, an dem hierzu geeignete Befestigungsmittel vorgesehen sein können. Selbstverständlich ist es ebenso denkbar, dass nicht die Magnetanordnung bzw. dass eine oder die mehreren porösen Mittel direkt an Bestandteilen der Bremseinheit befestigt bzw. montiert werden, sondern dass z. B. ein separates Gehäuse für die Auffangvorrichtung vorgesehen ist, das seinerseits befestigt wird, so dass gegebenenfalls die Magnetanordnung nur indirekt mit der Bremseinheit verbunden ist. Die Wahl der Befestigungsmittel hängt dabei unter anderem von den Belastungen ab, die im Betrieb der Bremse bzw. der Anlage oder Maschine, der die Bremse zugeordnet ist, auftreten. Weist die Bremse ein geschlossenes Gehäuse auf, so bietet sich eine Befestigung am inneren Gehäuseumfang an, beispielsweise durch Clippen, Ankleben und/oder Anschrauben oder dergleichen.

Wird eine Bremseinheit mit einem geschlossenen Gehäuse mit der erfindungsgemäßen Auffangeinheit versehen, so bietet dies gegenüber dem Ansatz, einfach am Gehäuse Durchbrüche vorzusehen, aus denen der Staub austreten kann, den Vorteil, dass die Bremse in der so genannten "International-Protection-Klassifizierung" einer höheren Schutzklasse genügen kann und zudem die Verschmutzung der Umgebung der Bremse mit dem staubförmigen Abrieb vermieden wird.

Wenigstens eine Magnetanordnung und/oder wenigstens ein poröses Mittel und/oder ein Befestigungsmittel und/oder eine Befestigung der Vorrichtung und/oder einer Magnetanordnung und/oder eines porösen Mittels am Gehäuse einer Bremseinheit können temperatur- und/oder wärmebeständig ausgebildet sein, insbesondere für Temperaturen über 80°C.

Die gegebenenfalls unterschiedlichen Befestigungsmittel bzw. Befestigungen für die Vorrichtung insgesamt, die Magnetanordnung bzw. ein oder mehrere poröse Mittel am Gehäuse können also, vorzugsweise alle, eine gewisse Temperaturbeständigkeit aufweisen, die bei üblichen Anwendungen bei Bremseinheiten typischerweise einen Temperaturbereich im Bereich von bzw. von über 80°C erfassen sollte. Gegebenenfalls kann es ausreichend sein, wenn nicht die Magnetanordnung bzw. das oder die porösen Mittel in ihrer Gesamtheit diese hohe Temperaturbeständigkeit aufweisen, sondern lediglich ein oder mehrere besonders exponierte Befestigungsmittel für einen Temperaturbereich von z. B. deutlich über 80°C geeignet sind. Dies hängt vom konkreten Anwendungsfall der Vorrichtung ab. Meist sind die an der Gehäusewandung von Bremseinheiten auftretenden Temperaturen recht hoch.

Wenigstens ein poröses Mittel kann zum Auffangen und/oder Zurückhalten von Bremsabrieb durch Adsorptionskräfte ausgebildet sein, insbesondere durch Van-der-Waals-Kräfte. Van-der-Waals-Kräfte sind nichtkovalente Wechselwirkungen zwischen Atomen bzw. Molekülen. Bei einem Adsorptionsvorgang, der vom Vorgang der Absorption zu unterscheiden ist, werden Stoffe bzw. Materialien an der Oberfläche eines Festkörpers, hier also in den Öffnungen der porösen Struktur, und somit an der Grenzfläche zwischen zwei Phasen abgelagert. Der Bremsabrieb bleibt aufgrund der Adsorptionskräfte an der Oberfläche des porösen Mittels haften. Es kommt zu einer Anreicherung und somit zu einem Auffangen des Staubs in der Vorrichtung.

Wenigstens ein poröses Mittel kann bei Verwendung der Vorrichtung in einer Bremseinheit mit einer, zumindest im Wesentlichen, in Richtung auf einen inneren Bereich der Bremseinheit zunehmenden Porengröße ausgebildet sein.

Eine derart unterschiedliche Porengröße der Struktur, wobei die Größe der Poren nicht unbedingt streng in einer bestimmte Richtung zu- oder abnehmen muss, ermöglicht beispielsweise über eine wellenartige Strukturierung an der äußeren Oberfläche hinaus eine weitere Verbesserung der Ablagerung des Bremsabriebs im Inneren. Die Ablagerung des Staubs in der Auffangvorrichtung wird somit z. B. durch eine geringere Strömungsgeschwindigkeit in bestimmten Bereichen, durch einen verringerten Durchströmungswiderstand insgesamt und des Weiteren durch die Ausnutzung von Adsorptionskräften zwischen den Staubpartikeln und der porösen Struktur gefördert und zudem durch die geeignete Wahl der Porengröße weiter optimiert.

Des Weiteren kann wenigstens ein poröses Mittel aus wenigstens einem organischen und/oder wenigstens einem anorganischen Material ausgebildet sein, insbesondere aus Glas und/oder einem Material auf Silikatbasis und/oder einem Metall und/oder einem Polymer, beispielsweise einem Epoxid- und/oder einem Polyester- und/oder einem Phenolharz.

Grundsätzlich kommen somit unterschiedliche Materialien für die poröse Struktur in Frage, wobei, ebenso wie bei den Magnetanordnungen, die Materialwahl so erfolgen sollte, dass gegebenenfalls den z. B. an einer Gehäusewandung einer Bremseinheit auftretenden Temperaturen zuverlässig widerstanden werden kann. Unter Umständen können auch verschiedene poröse Mittel, teilweise aus organischen, teilweise aus anorganischen Materialien, verwendet werden. Entscheidend ist letztlich, dass sich eine geeignete offenporige Struktur herstellen lässt und dass der Werkstoff die benötigte Wärmebeständigkeit, meist von über 80°C, aufweist. Dabei können die porösen Mittel bzw. das poröse Mittel einer derartigen Auffangvorrichtung aus einem einzigen Werkstoff bestehen, z. B. aus Glas, bzw. es können Mischungen oder abwechselnd angeordnete Materialien verwendet werden, beispielsweise derart, dass eine unterschiedliche Porengröße durch unterschiedliche Materialien realisiert wird.

Wenigstens ein poröses Mittel kann, zumindest teilweise, als offenporiger Schaum und/oder als Vlies und/oder als Gewebe und/oder als Watte und/oder auf Faserbasis ausgebildet sein und/oder die Vorrichtung kann wenigstens ein Gitter und/oder Lochblech und/oder Gewebe als Begrenzung, insbesondere in Richtung auf einen inneren Bereich einer Bremseinheit, aufweisen.

Eine Begrenzung der Auffangeinheit zum Bremseninneren hin bietet sich insbesondere bei Verwendung eines wenig formbeständigen Materials wie Watte an, in welchem Fall dann eine feste Abgrenzung gegenüber der Umgebung beispielsweise durch ein Gitter bzw. dergleichen geschaffen werden kann. Selbstverständlich kann beispielsweise ein Schaum in Kombination mit einem Gewebe oder einer Watte verwendet werden bzw. die poröse Struktur kann einen einheitlichen Aufbau aufweisen. Aus den genannten Materialien können z. B. geeignete Fasern hergestellt werden, die in der Auffangvorrichtung nach Bedarf angeordnet bzw. geeignet miteinander kombiniert werden.

Die Vorrichtung kann mit wenigstens einer im Wechsel mit wenigstens einem porösen Mittel angeordneten Magnetanordnung, insbesondere mit einer Magnetanordnung an einem inneren Bereich eines Gehäuses und wenigstens einem sich zum inneren Bereich einer Bremseinheit anschließenden porösen Mittel, ausgebildet sein und/oder es kann wenigstens ein poröses Mittel, insbesondere mittels wenigstens eines Füllstoffes und/oder durch geeignete Materialwahl, eine Magnetanordnung darstellen.

Es gibt somit unterschiedliche Möglichkeiten einer Kombination der zwei grundlegend verschiedenen Wirkprinzipien, nämlich des Auffangens des Bremsabriebs durch Magnetkraft und des Auffangens in einer porösen Struktur.

Einerseits kann der in einer Bremse verfügbare Bauraum abwechselnd mit Auffangstrukturen nach den unterschiedlichen Prinzipien bestückt werden, andererseits kann beispielsweise die poröse Struktur durch eine entsprechende Materialwahl oder mit Füllstoffen so ausgeführt werden, dass sie letztlich selbst als Permanentmagnet wirksam ist und entsprechend mit abwechselnder Polarität aufmagnetisiert wird. Gegebenenfalls kann eine geeignete permanentmagnetische Struktur zwischen der porösen Struktur und der Gehäuseinnenwand einer Bremse so angebracht werden, dass an der der Bremsinnenseite zugewandten Oberfläche der porösen Struktur noch eine zum Auffangen des Bremsabriebs bzw. zu dessen Bindung ausreichende magnetische Feldstärke vorhanden ist, insbesondere im Bereich von bzw. mehr als 1000 A/m (Ampere pro Meter).

Auch bei einer Kombination beider Prinzipien sowie bei einer Verwendung des Magnetprinzips allein bietet die bereits beschriebene Möglichkeit einer wellenförmigen Ausführung der äußeren Oberfläche den Vorteil, dass sich der Staub einfacher (magnetisch) fixieren lässt, da durch die Wellenform strömungsberuhigte Zonen geschaffen werden. Durch eine unterschiedliche Polarität jeweils benachbarter Erhebungen wird in den Einbuchtungen zwischen den Erhebungen eine vergleichsweise hohe magnetische Feldstärke erzielt.

Darüber hinaus betrifft die Erfindung eine Bremseinheit, ausgebildet mit einer Vorrichtung zum Auffangen und/oder Zurückhalten von Bremsabrieb einer Bremseinheit, die sich dadurch auszeichnet, dass die Vorrichtung mit wenigstens einer Magnetanordnung zum Auffangen und/oder Zurückhalten von, zumindest im Wesentlichen, magnetischem Bremsabrieb mittels Magnetkraft ausgebildet ist, insbesondere mit einer Vorrichtung wie im Vorstehenden geschildert.

Die Bremse weist somit eine separate bzw. in die Bremse integrierte Auffangvorrichtung für Bremsstaub auf, die auf einem magnetischen Wirkprinzip mit einer geeigneten, den Eintrag des Bremsabriebs fördernden (äußeren) Oberflächenstrukturierung basiert.

Bei der Bremseinheit kann es sich um eine Industriebremseinheit, insbesondere eine Haltebremseinheit und/oder eine Sicherheitsbremseinheit und/oder einer Arbeitsbremse, oder eine Bremseinheit für Fahrzeuge und/oder eine Scheibenbremseinheit handeln. Die Realisierung mit der beschriebenen Auffangvorrichtung kann somit in unterschiedlichen Bremsanwendungsbereichen vorgenommen werden, insbesondere auch bei Industriebremsen, beispielsweise als Haltebremse oder reine Sicherheitsbremse mit Notstoppfunktion. Daneben ist eine Ausführung der Auffangeinheit für Arbeitsbremsen denkbar, bei denen in der Regel gegenüber Halte- und Sicherheitsbremsen aufgrund des höheren Verschleißweges mehr Abrieb anfällt.

Die Vorrichtung zum Auffangen und/oder Zurückhalten von Bremsabrieb kann bei der Bremseinheit, zumindest im Wesentlichen, in einem Bereich radial um eine Bremsscheibe der Bremseinheit angeordnet sein und/oder die Bremseinheit kann, zumindest über wenigstens ein Winkelsegment in einem Bereich radial um eine Bremsscheibe, einen ein- oder mehrteiligen Raum zur Aufnahme der Vorrichtung zum Auffangen und/oder Zurückhalten von Bremsabrieb aufweisen.

Die Art des Aufsammelns des Staubs radial um die Bremsscheibe bietet sich in dem Fall an, dass keine Sattelbremse vorliegt, sondern der Abrieb einer Bremse mit auf dem ganzen Umfang anliegenden Bremsbelägen aufgefangen werden soll. Bremseinheiten sind in der Regel bereits so ausgeführt, dass sich rings um die Bremsscheibe entsprechende freie Räume befinden, die als Bauräume für die Vorrichtung zum Auffangen des Bremsabriebs genutzt werden können, bzw. es ist möglich, eine Bremse so auszuführen, dass zumindest über gewisse Winkelsegmente radial ein derartiger ein- bzw. mehrteiliger Raum geschaffen wird, der für die erfindungsgemäße Auffangeinheit benutzt werden kann.

Bei der erfindungsgemäßen Bremseinheit können wenigstens ein Reibbelag und/oder wenigstens ein Reibpartner der Bremseinheit, zumindest im Wesentlichen, aus wenigstens einem ferromagnetischen oder ferrimagnetischen Material bestehen, insbesondere aus Stahl und/oder Gusseisen und/oder aufgrund entsprechender Zuschläge.

Sehr oft handelt es sich bei den Reibpartnern für den Reibbelag in herkömmlichen Bremsen bereits um ferromagnetische Werkstoffe wie Stahl oder Gusseisen. Auch sind einige Reibbeläge ferro- oder zumindest ferrimagnetisch, meist bedingt durch entsprechende Zuschläge. Aber auch in dem Fall, dass die Reibbeläge selbst unmagnetisch sind, ergibt sich bei ferromagnetischen Reibpartnern ein insgesamt magnetischer Bremsabrieb, weil sich die unmagnetischen Partikel des Abriebs und die ferromagnetischen Partikel des Reibpartners aneinander anlagern, so dass der Abrieb insgesamt an einer geeigneten Dauermagnetanordnung angelagert werden kann. Durch das Binden des Abreibs wird verhindert, dass sich dieser frei im Inneren des Bremsengehäuses verteilen kann und so beispielsweise die Bremsenfunktion negativ beeinträchtigt.

Die Bremseinheit kann ein geschlossenes Gehäuse aufweisen, insbesondere ein zumindest im Wesentlichen oder vollständig geschlossenes Gehäuse.

Gerade im Fall von Bremsen mit einem geschlossenen Gehäuse kann es, um auf Dauer ein zuverlässiges Funktionieren in der Bremse zu gewährleisten, von Vorteil sein, den Bremsabrieb möglichst vollständig aufzufangen, damit es nicht zu einer Verschmutzung funktionswichtiger Bestandteile und Komponenten der Bremse kommt. Andererseits kann es auch bei einem Bremsgehäuse mit Öffnungen bzw. Bremsen ohne Gehäuse von Vorteil sein, den Bremsabrieb aufzufangen, schon um eine Verschmutzung der Umgebung zu verhindern. Die Verwendung eines geschlossenen Gehäuses in Kombination mit einer erfindungsgemäßen Auffangvorrichtung kann außerdem dazu führen, dass die Bremseinheit insgesamt höheren Schutz- bzw. Sicherheitsanforderungen genügt.

Bei Vorliegen eines Gehäuses können die oder eine Vorrichtung bzw. wenigstens eine Magnetanordnung, insbesondere eine streifenförmig ausgebildete Magnetanordnung, an einem inneren Bereich des Gehäuses der Bremseinheit, vorrangig am inneren Umfang, befestigt sein. Die Magnetanordnung der Auffangvorrichtung für den Bremsantrieb können also vorteilhafterweise geeignet an der Gehäusewandung befestigt werden, wobei sie hierzu so ausgeführt sein müssen, dass sie den dort auftretenden Temperaturen zuverlässig widerstehen. Die Befestigung am Gehäuse kann, wie bereits im Zusammenhang mit der Vorrichtung geschildert wurde, form-, kraft- und/oder stoffschlüssig ausgebildet sein. Insbesondere bietet sich eine Befestigung durch Nieten, Schrauben bzw. Klemmen und/oder Einspreizen und/oder Kleben an.

Wenigstens eine Magnetanordnung und/oder wenigstens ein poröses Mittel und/oder ein Befestigungsmittel und/oder eine Befestigung der Vorrichtung und/oder einer Magnetanordnung und/oder eines porösen Mittels am Gehäuse der Bremseinheit, also ein oder mehrere bzw. alle Befestigungsmittel und/oder Befestigungen, die eine oder die mehreren Vorrichtungen und gegebenenfalls bestimmte Funktionsteile der Vorrichtung, können temperatur- und/oder wärmebeständig ausgebildet sein, insbesondere für Temperaturen über 80°C, mit denen oft an den Gehäusen bzw. Gehäusewandungen von Industriebremsen bzw. bei Bremsen in anderen Bereichen zu rechnen ist.

Dabei ist die hier angegebene Temperatur von 80°C bzw. die Wärmebeständigkeit für Temperaturen über 80°C lediglich beispielhaft zu verstehen. Selbstverständlich können je nach Bremseinheit bzw. bei speziellen Bremsen höhere oder auch geringere Anforderungen hinsichtlich der Temperaturbeständigkeit bestehen, für die dann die Auffangvorrichtungen entsprechend auszurichten sind.

Die eine oder die mehreren Vorrichtungen zum Auffangen und/oder Zurückhalten von Bremsabrieb bei der Bremseinheit können mit wenigstens einer im Wechsel mit wenigstens einem porösen Mittel angeordneten Magnetanordnung, insbesondere mit einer Magnetanordnung an einem inneren Bereich eines Gehäuses und wenigstens einem sich zum inneren Bereich der Bremseinheit anschließenden porösen Mittel, ausgebildet sein und/oder es kann wenigstens ein poröses Mittel, insbesondere mittels wenigstens eines Füllstoffes und/oder durch geeignete Materialwahl, eine Magnetanordnung darstellen.

Es gibt somit unterschiedliche Möglichkeiten, die Auffangvorrichtung bzw. die Auffangvorrichtungen der Bremseinheit so auszuführen, dass darin die unterschiedlichen Wirkprinzipien, einerseits der Verwendung von Magnetkraft zum Binden des Staubs, andererseits des Verwendens einer porösen Struktur mit einer geeigneten äußeren Oberfläche, kombiniert sind.

Dabei ist gegebenenfalls zu beachten, dass für eine effektive Nutzung des Magnetprinzips an der Bremseninnenseite eine noch ausreichende magnetische Feldstärke gegeben ist.

Außerdem offenbart die Erfindung ein Verfahren zum Auffangen und/oder Zurückhalten von Bremsabrieb einer Bremseinheit, insbesondere einer Industriebremseinheit und/oder einer Bremseinheit wie im Vorstehenden geschildert und/oder mittels wenigstens einer Vorrichtung, wie sie eingangs beschrieben wurde, bei welchem Verfahren mittels wenigstens einer Magnetanordnung, zumindest im Wesentlichen, magnetischer Bremsabrieb mittels Magnetkraft und/oder bei welchem Bremsabrieb mittels wenigstens eines eine zur Förderung des Eintrags von Bremsabrieb geeignete Strukturierung an wenigstens einer äußeren Oberfläche aufweisenden porösen Mittels aufgefangen und/oder zurückgehalten wird.

Das Verfahren ist also ein Verfahren zum Binden bzw. Fixieren von Bremsstaub, bei dem (bei insgesamt magnetischem Bremsabrieb) ein magnetisches Bindungsprinzip und/oder (z. B. bei teilweise nicht magnetischem Abrieb) ein Prinzip der Staubbindung mittels eines porösen Mittels, das eine geeignete Strukturierung einer äußeren Oberfläche aufweist, alleine bzw. in Kombination miteinander zum Einsatz kommen.

Weitere Vorteile, Merkmale und Einzelheiten der Erfindung ergeben sich anhand der folgenden Ausführungsbeispiele sowie aus den Zeichnungen. Dabei zeigen:
Figur 1 eine Darstellung einer erfindungsgemäßen Bremseinheit,
Figur 2 eine Skizze einer erfindungsgemäßen Vorrichtung zum Auffangen und/oder Zurückhalten von Bremsabrieb am Gehäuse einer Bremseinheit durch Magnetkraft und
Figur 3 eine Skizze einer weiteren erfindungsgemäßen Vorrichtung mit einer porösen Struktur.

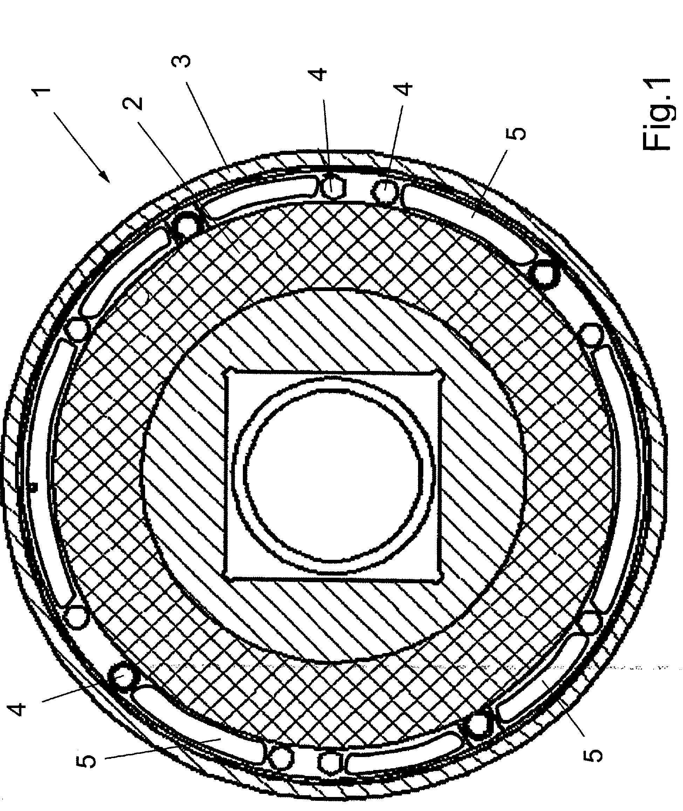

In der Figur 1 ist eine Darstellung einer erfindungsgemäßen Bremseinheit 1 mit einer Bremsscheibe 2 mit einem zugehörigen Bremsbelag gezeigt. Die erfindungsgemäße Bremseinheit 1 verfügt über ein vollständig geschlossenes Gehäuse 3. In einem radialen Bereich um die Bremsscheibe 2 bestehen zwischen Durchgängen 4 für Befestigungsschrauben, die hier nicht näher dargestellt sind, über gewisse Winkelsegmente Bauräume 5 für Vorrichtungen zum Auffangen bzw. Zurückhalten von Bremsabrieb, die in der hier vorliegenden Querschnittsdarstellung allerdings aus Gründen der Übersichtlichkeit nicht gezeigt sind.

Im vorliegenden Ausführungsbeispiel sind mehrere Bauräume 5 für Auffangvorrichtungen vorhanden, so dass ein insgesamt mehrteiliger Bereich vorliegt, in dem jeweils die Auffangeinheiten für den Bremsabrieb aufgenommen sind. Dabei können bei verschiedenen Bremseinheiten Auffangeinheiten unterschiedlicher Art in dem Sinne verwendet werden, dass sie entweder auf einem magnetischen Wirkprinzip oder zusätzlich auf dem Wirkprinzip der porösen Struktur basieren.

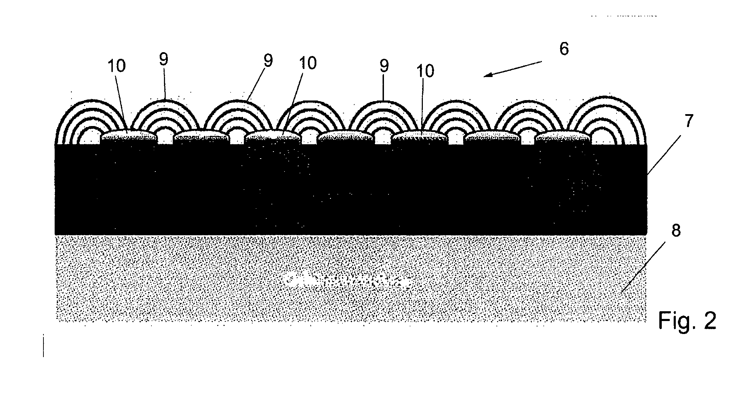

In der Figur 2 ist eine Skizze einer erfindungsgemäßen Vorrichtung 6 zum Auffangen und/oder Zurückhalten von Bremsabrieb am Gehäuse einer Bremseinheit durch Magnetwirkung dargestellt. Dabei ist die Vorrichtung 6 am Gehäuse aus Gründen einer vereinfachten Darstellung abgewickelt gezeigt. Die Vorrichtung 6 zum Auffangen bzw. Zurückhalten von Bremsabrieb basiert im hier gezeigten Fall auf einem magnetischen Wirkprinzip. Hierzu ist ein Magnetstreifen 7 vorgesehen, der als kunststoffgebundener Magnetstreifen 7 ausgeführt und an einer Gehäusewandung 8 der Bremseinheit befestigt ist.

Im hier gezeigten Ausführungsbeispiel ist der Magnetstreifen 7 an der Gehäusewandung 8 angeklebt. In anderen Ausführungsbeispielen können aber ebenso andere Befestigungsarten wie Nieten, Klemmen bzw. Befestigen durch Einspreizen oder Schrauben oder auch eine Kombination unterschiedlicher Befestigungsarten zum Einsatz kommen.

Auf dem Magnetstreifen 7 wechseln sich Pole unterschiedlicher Polarität ab, zwischen denen Feldlinien 9 verlaufen. Wie in der Skizze zu sehen ist, lagert sich der durch die über die Vorrichtung hinweg strömende Luft transportierte insgesamt magnetische Bremsabrieb 10 an Polen des Magnetstreifens 7 ab und wird so fixiert bzw. gebunden. Damit wird verhindert, dass sich der Bremsabrieb 10 frei im Inneren des Bremsgehäuses verteilen kann und so gegebenenfalls eine Schädigung der Funktion der Bremse herbeiführt.

Der Magnetstreifen 7 ist so ausgeführt, dass er und die entsprechende Klebbefestigung den an der Gehäusewandung 8 auftretenden Temperaturen von gegebenenfalls über 80°C zuverlässig widersteht.

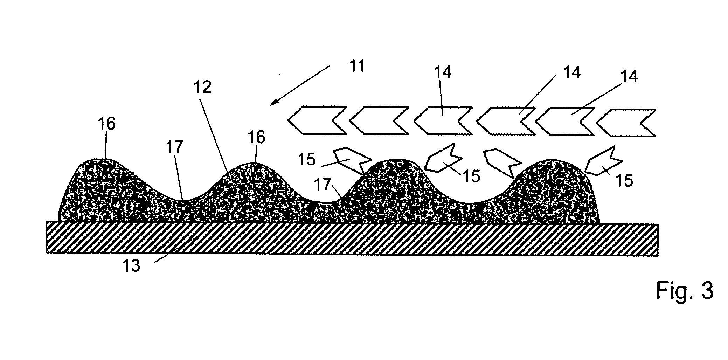

Die Figur 3 zeigt eine Skizze einer weiteren, offenbarten Vorrichtung 11 zum Auffangen bzw. Zurückhalten von Bremsstaub, bei der eine poröse Struktur 12 verwendet wird. Die offenporige Struktur 12 ist wiederum an der Gehäusewandung 13 einer Bremseinheit angebracht, im hier gezeigten Fall durch Kleben, wobei, wie im Fall des Magnetstreifens des vorhergehenden Ausführungsbeispiels, selbstverständlich alternativ oder ergänzend andere Befestigungsmöglichkeiten vorgesehen sein können.

Durch die Rotation der hier nicht gezeigten Bremsscheibe der Bremseinheit ergibt sich eine Luftströmung, die durch die Pfeile 14 angedeutet ist und die dafür sorgt, dass Bremsabrieb, der mit der strömenden Luft transportiert wird, überhaupt in den Bereich der Auffangvorrichtung 11 gelangt. Die durch die Bremsscheibenrotation erzeugte Luftströmung durchströmt die Vorrichtung 11, wobei aufgrund der spezifischen Strukturierung an der dem Luftstrom zugewandten äußeren Oberfläche der Vorrichtung 11 mit Erhebungen 16 sowie Tälern 17, wie hier durch die Pfeile 15 angedeutet, eine Förderung des Eintrags von Bremsabrieb bewirkt wird, die auf Verwirbelungen bei einem gleichzeitig insgesamt geringen Durchströmungswiderstand der Vorrichtung 11 beruht.

Die hier gezeigte Vorrichtung 11 weist eine poröse Struktur 12 auf, bei der die Porengröße nicht vom Abstand von der Gehäusewandung 13 abhängt. Ebenso ist es aber in anderen Ausführungsbeispielen denkbar, dass die Porengröße einer entsprechenden Auffangstruktur sich von der der Gehäusewandung zugewandten Oberfläche zu dem Inneren der Bremse hin vergrößert. Dies kann gegebenenfalls zu einem effektiveren Auffangen des Bremsstaubs führen.

Daneben sind selbstverständlich Ausführungen denkbar, in denen die poröse Struktur selbst magnetisch ausgeführt ist, gegebenenfalls mit Hilfe von Füllstoffen bzw. Zusätzen und dergleichen, oder bei denen eine Vorrichtung zum Auffangen und Zurückhalten von Bremsabrieb neben porösen Mitteln zusätzlich Magnete aufweist bzw. bei denen sich Bereiche, die auf einem der beiden Wirkprinzipien basieren, miteinander abwechseln.

### Bezugszeichenliste

1 Bremseinheit
2 Bremsscheibe
3 Gehäuse
4 Durchgang
5 Bauraum
6 Vorrichtung zum Auffangen und/oder Zurückhalten von Bremsabrieb
7 Magnetstreifen
8 Gehäusewandung
9 Feldlinie
10 Bremsabrieb
11 Vorrichtung zum Auffangen bzw. Zurückhalten von Bremsstaub
12 poröse Struktur
13 Gehäusewandung
14 Luftströmung
15 Pfeil
16 Erhebung
17 Tal

## Patentansprüche

1. Vorrichtung (6, 11) zum Auffangen und/oder Zurückhalten von Bremsabrieb (10) einer Bremseinheit (1), **dadurch gekennzeichnet, dass** die Vorrichtung (6, 11) mit wenigstens einer Magnetanordnung (7) zum Auffangen und/oder Zurückhalten von, zumindest im Wesentlichen, magnetischem Bremsabrieb (10) mittels Magnetkraft ausgebildet ist, wobei die Magnetanordnung (7) derart zur Förderung des Eintrags von Bremsabrieb (10) strukturiert ist, dass sie bei Verwendung der Vorrichtung in einer Bremseinheit mit Erhebungen sich abwechselnder Polarität ausgebildet ist.

2. Vorrichtung (6, 11) nach Anspruch 1, **dadurch gekennzeichnet, dass** die Vorrichtung (6, 11) mit wenigstens einem eine zur Förderung des Eintrags von Bremsabrieb geeignete Strukturierung an wenigstens einer äußeren Oberfläche aufweisenden porösen Mittel (12) ausgebildet ist.

3. Vorrichtung (6, 11) nach Anspruch 2, **dadurch gekennzeichnet, dass** wenigstens ein poröses Mittel (12) derart zur Förderung des Eintrags von Bremsabrieb (10) strukturiert ist, dass zumindest die, bei Verwendung der Vorrichtung in einer Bremseinheit (1), einem inneren Bereich der Bremseinheit (1) zugewandte äußere Oberfläche des porösen Mittels (12) wellenartig und/oder zur Wirbelbildung eines Luftstroms in der Vorrichtung (6, 11) in wenigstens einem für den Eintrag von Bremsabrieb (10) vorgesehenen Bereich der Vorrichtung (6, 11) ausgebildet ist.

4. Vorrichtung (6, 11) nach einem der vorangehenden Ansprüche, **dadurch gekennzeichnet, dass** wenigstens eine Magnetanordnung (7) streifenförmig und/oder kunststoffgebunden ausgebildet ist, insbesondere mit mehreren nebeneinander angeordneten Magnetpolen.

5. Vorrichtung nach einem der vorangehenden Ansprüche, **dadurch gekennzeichnet, dass** die Vorrichtung (6, 11) zur Befestigung mittels wenigstens eines Befestigungsmittels an einem inneren Bereich eines Gehäuses (3) einer Bremseinheit (1) ausgebildet sind.

6. Vorrichtung (6, 11) nach einem der vorangehenden Ansprüche, **dadurch gekennzeichnet, dass** wenigstens eine Magnetanordnung (7) und/oder wenigstens ein poröses Mittel (12) und/oder ein Befestigungsmittel und/oder eine Befestigung der Vorrichtung (6, 11) und/oder einer Magnetanordnung (7) und/oder eines porösen Mittels (12) an einem Gehäuse (3) einer Bremseinheit (1) für Temperaturen über 80° Celsius temperaturbeständig ausgebildet sind.

7. Vorrichtung (6, 11) nach einem der Ansprüche 2 bis 6, **dadurch gekennzeichnet, dass** wenigstens ein poröses Mittel (12) zum Auffangen und/oder Zurückhalten von Bremsabrieb (10) durch Adsorptionskräfte ausgebildet ist.

8. Vorrichtung (6, 11) nach einem der Ansprüche 2 bis 7, **dadurch gekennzeichnet, dass** wenigstens ein poröses Mittel (12) bei Verwendung der Vorrichtung (6, 11) in einer Bremseinheit (1) mit einer, zumindest im Wesentlichen, in Richtung auf einen inneren Bereich der Bremseinheit (1) zunehmenden Porengröße ausgebildet ist.

9. Vorrichtung (6, 11) nach einem der Ansprüche 2 bis 8, **dadurch gekennzeichnet, dass** wenigstens ein poröses Mittel (12), zumindest teilweise, als offenporiger Schaum und/oder als Vlies und/oder als Gewebe und/oder als Watte und/oder auf Faserbasis ausgebildet ist.

10. Vorrichtung (6, 11) nach einem der vorangehenden Ansprüche, **dadurch gekennzeichnet, dass** die Vorrichtung (6, 11) wenigstens ein Gitter und/oder Lochblech und/oder Gewebe als Begrenzung aufweist.

11. Vorrichtung (6, 11) nach einem der Ansprüche 2 bis 10, **dadurch gekennzeichnet, dass** die Vorrichtung (6, 11) mit wenigstens einer im Wechsel mit wenigstens einem porösen Mittel (12) angeordneten Magnetanordnung (7) ausgebildet ist, wobei die Magnetanordnung (7) an einem inneren Bereich eines Gehäuses (3) angeordnet ist und sich das wenigstens eine poröse Mittel (12) zum inneren Bereich einer Bremseinheit (1) anschließt.

12. Vorrichtung (6, 11) nach einem der vorangehenden Ansprüche 2 bis 11, **dadurch gekennzeichnet, dass** wenigstens ein poröses Mittel (12), eine Magnetanordnung (7) darstellt.

13. Bremseinheit (1), ausgebildet mit wenigstens einer Vorrichtung (6,' 11) zum Auffangen und/oder Zurückhalten von Bremsabrieb (10) einer Bremseinheit (1) nach einem der vorangehenden Ansprüche.

14. Bremseinheit (1) nach Anspruch 13, **dadurch gekennzeichnet, dass** die Vorrichtung (6, 11) zum Auffangen und/oder Zurückhalten von Bremsabrieb (10), zumindest im Wesentlichen, in einem Bereich radial um eine Bremsscheibe (2) der Bremseinheit (1) angeordnet ist.

15. Bremseinheit (1) nach einem der Ansprüche 13 oder 14, **dadurch gekennzeichnet, dass** die Bremseinheit (1) ein zumindest im Wesentlichen geschlossenes Gehäuse (3) aufweist.

## Claims

1. A device (6, 11) for capturing and/or retaining brake dust (10) of a braking unit (1), **characterised in that** the device (6, 11) is formed with at least one magnet arrangement (7) for collecting and/or retaining, at least substantially, magnetic brake dust (10) using magnetic force, the magnet arrangement (7) being structured to promote the entry of brake dust (10) such that, when using the device in a braking unit with elevations, alternating polarity is formed.

2. The device (6, 11) according to Claim 1, **characterised in that** the device (6, 11) is formed with at least one porous means (12) having structuring on at least one outer surface suitable for promoting the entry of brake dust.

3. The device (6, 11) according to Claim 2, **characterised in that** at least one porous means (12) is structured to promote the entry of brake dust (10) such that, when using the device in a braking unit (1), at least the outer surface of the porous means (12) facing towards an inner region of the braking unit (1) is wavelike in form and/or is designed to form swirl in an airflow in the device (6, 11) in at least one region of the device (6, 11) provided for the entry of brake dust (10).

4. The device (6, 11) according to any of the preceding claims, **characterised in that** at least one magnet arrangement (7) is strip-like and/or synthetically bonded, in particular with a number of magnetic poles arranged next to one another.

5. The device according to any of the preceding claims, **characterised in that** the device (6, 11) is designed to be attached by at least one attachment means to an inner region of a housing (3) of a braking unit (1).

6. The device (6, 11) according to any of the preceding claims, **characterised in that** at least one magnet arrangement (7) and/or at least one porous means (12) and/or an attachment means and/or an attachment of the device (6, 11) and/or of a magnet arrangement (7) and/or of a porous means (12) are formed on a housing (3) of a braking unit (1), resistant to temperatures of over 80° Celsius.

7. The device (6, 11) according to any of Claims 2 to 6, **characterised in that** at least one porous means (12) is formed for collecting and/or retaining brake dust (10) by means of adsorption forces.

8. The device (6, 11) according to any of Claims 2 to 7, **characterised in that**, when using the device (6, 11) in a braking unit (1), at least one porous means (12) is formed with a pore size that increases, at least substantially, in the direction of an inner region of the braking unit (1).

9. The device (6, 11) according to any of Claims 2 to 8, **characterised in that** at least one porous means (12) is formed, at least partially, as an open-pore foam and/or as a fleece and/or as a fabric and/or as a wadding and/or on a fibre base.

10. The device (6, 11) according to any of the preceding claims, **characterised in that** the device (6, 11) has at least one grid and/or perforated sheet and/or fabric as a boundary.

11. The device (6, 11) according to any of Claims 2 to 10, **characterised in that** the device (6, 11) is formed with at least one magnet arrangement (7) arranged alternately with at least one porous means (12), the magnet arrangement (7) being disposed on an inner region of a housing (3), and the at least one porous means (12) adjoining the inner region of a braking unit (1).

12. The device (6, 11) according to any of the preceding Claims 2 to 11, **characterised in that** at least one porous means (12) constitutes a magnet arrangement (7).

13. A braking unit (1), formed with at least one device (6, 11) for collecting and/or retaining brake dust (10) of a braking unit (1) according to any of the preceding claims.

14. The braking unit (1) according to Claim 13, **characterised in that** the device (6, 11) for collecting and/or retaining brake dust (10) is disposed at least substantially in a region radially surrounding a brake disc (2) of the braking unit (1).

15. The braking unit (1) according to either of Claims 13 or 14, **characterised in that** the braking unit (1) has an at least substantially closed housing (3).

## Revendications

1. Dispositif (6, 11) pour capturer et/ou retenir les débris de frein (10) d'une unité de frein (1), **caractérisé en ce que** le dispositif (6, 11) est configuré avec au moins un dispositif magnétique (7) destiné à capturer et/ou à retenir des débris de frein (10) au moins essentiellement magnétiques, au moyen d'une force magnétique, le dispositif magnétique (7) étant structuré pour favoriser l'entraînement de débris de frein (10) de telle sorte que, lors de l'utilisation du dispositif dans une unité de frein comportant des saillies, il est configuré avec une polarité changeante.

2. Dispositif (6, 11) selon la revendication 1, **caractérisé en ce que** le dispositif (6, 11) est configuré avec au moins un moyen poreux (12) qui présente au moins sur une surface extérieure une structuration appropriée pour favoriser l'entraînement de débris de frein.

3. Dispositif (6, 11) selon la revendication 2, **caractérisé en ce qu'**au moins un milieu poreux (12) est structuré pour favoriser l'entraînement de débris de frein (10) de telle sorte qu'au moins la surface extérieure du moyen poreux (12) dirigée vers une région intérieure de l'unité de frein (1) lors de l'utilisation du dispositif dans une unité de frein (1) est de forme ondulée et/ou configurée pour mettre un flux d'air en mouvement tourbillonnaire dans le dispositif (6, 11) dans au moins une région prévue pour l'entraînement de débris de frein (10).

4. Dispositif (6, 11) selon l'une des revendications précédentes, **caractérisé en ce qu'**au moins un dispositif magnétique (7) est configuré en forme de bande et/ou lié par une matière plastique, en particulier avec plusieurs pôles magnétiques disposés l'un à côté de l'autre.

5. Dispositif selon l'une des revendications précédentes, **caractérisé en ce que** le dispositif (6, 11) est configuré pour être fixé au moyen d'au moins un moyen de fixation à une zone intérieure d'un boîtier (3) d'une unité de frein (1) .

6. Dispositif (6, 11) selon l'une des revendications précédentes, **caractérisé en ce qu'**au moins un dispositif magnétique (7) et/ou au moins un moyen poreux (12) et/ou un moyen de fixation et/ou une fixation du dispositif (6, 11) et/ou d'un dispositif magnétique (7) et/ou d'un moyen poreux (12) solidaire(s) d'un boîtier (3) d'une unité de frein (1) sont configurés résistants à la température pour des températures supérieures à 80 °Celsius.

7. Dispositif (6, 11) selon l'une des revendications 2 à 6, **caractérisé en ce qu'**au moins un moyen poreux (12) est configuré pour capturer et/ou retenir des débris de frein (10) par des forces d'adsorption.

8. Dispositif (6, 11) selon l'une des revendications 2 à 7, **caractérisé en ce que**, lors de l'utilisation du dispositif (6, 11) dans une unité de frein (1), au moins un moyen poreux (12) est configuré avec une dimension de pores qui croît au moins essentiellement en direction d'une zone intérieure de l'unité de frein (1).

9. Dispositif (6, 11) selon l'une des revendications 2 à 8, **caractérisé en ce qu'**au moins un milieu poreux (12) est configuré, au moins partiellement, sous la forme d'une mousse à pores ouverts et/ou sous la forme d'un non-tissé et/ou sous la forme d'un tissu et/ou sous la forme d'ouate, et/ou à base de fibres.

10. Dispositif (6, 11) selon l'une des revendications précédentes, **caractérisé en ce que** le dispositif (6, 11) présente comme limitation au moins une grille et/ou une tôle perforée et/ou un tissu.

11. Dispositif (6, 11) selon l'une des revendications 2 à 10, **caractérisé en ce que** le dispositif (6, 11) est configuré avec au moins un dispositif magnétique (7) disposé en alternance avec au moins un moyen poreux (12), le dispositif magnétique (7) étant disposé au niveau d'une zone intérieure d'un boîtier (3) et ledit au moins un moyen poreux (12) faisant suite à la zone intérieure d'une unité de frein (1).

12. Dispositif (6, 11) selon l'une des revendications précédentes 2 à 11, **caractérisé en ce qu'**au moins un moyen poreux (12) représente un dispositif magnétique (7).

13. Unité de frein (1) configurée avec au moins un dispositif (6, 11) destiné à capturer et/ou retenir des débris de frein (10) d'une unité de frein (1) selon l'une des revendications précédentes.

14. Unité de frein (1) selon la revendication 13, **caractérisée en ce que** le dispositif (6, 11) destiné à capturer et/ou retenir des débris de frein (10) est disposé au moins essentiellement dans une zone située radialement autour d'un disque de frein (2) de l'unité de frein (1).

15. Unité de frein (1) selon l'une des revendications 13 ou 14, **caractérisée en ce que** l'unité de frein (1) présente un boîtier (3) au moins essentiellement fermé.
